# EUROPÄISCHE PATENTSCHRIFT

(11) **EP 4 388 836 B1**
(45) Veröffentlichungstag und Bekanntmachung des Hinweises auf die Patenterteilung: **24.12.2025**
(21) Anmeldenummer: 23215010.2
(22) Anmeldetag: 07.12.2023
(51) Int. Cl.: A01B 1/06, A01B 1/08

(54) **GARTENWERKZEUG FÜR VERSCHIEDENE GARTENARBEITEN**
GARDEN TOOLS FOR VARIOUS GARDENING TASKS
OUTILS DE JARDINAGE POUR DIFFÉRENTS TRAVAUX DE JARDINAGE

(30) Priorität: 19.12.2022 CH 15262022; 28.04.2023 CH 4512023; 28.09.2023 CH 10682023
(43) Veröffentlichungstag der Anmeldung: 26.06.2024
(73) Patentinhaber: Kojovic, Jovo, 8810 Horgen (CH)
(72) Erfinder: Kojovic, Jovo, 8810 Horgen (CH)
(74) Vertreter: Felber, Josef

(56) Entgegenhaltungen:
- FR-A- 748 755
- US-A- 1 234 485
- US-A1- 2016 157 408

## Beschreibung

Diese Erfindung betrifft ein Gartenwerkzeug zum Ausführen verschiedener Gartenarbeiten und insbesondere zum Erstellen von Furchen zum anschliessenden Setzen von Sämlingen, Zwiebeln und Setzlingen. Für die Gartenarbeiten werden bisher verschiedene Werkzeuge eingesetzt, als da sind: Spaten, Schaufel, Harke oder Grabegabel, Rechen, Unkrautstecher, Scheren, Axt, Beil oder Astschere nebst der Gießkanne und der Leiter.

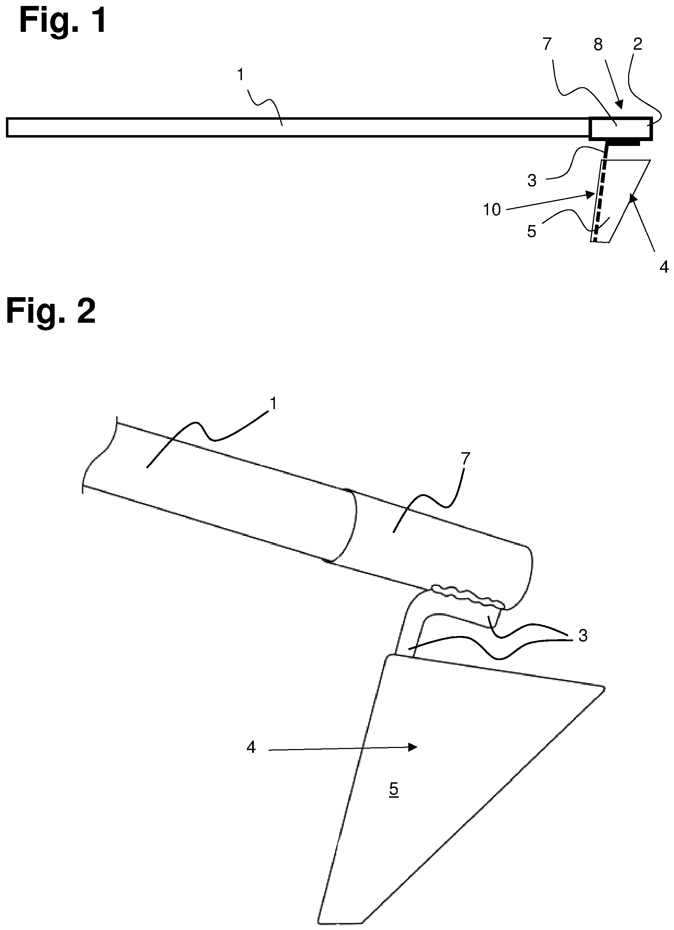

Im Stand der Technik ist aus der US 1 234 485 eine Gartenhacke bekannt. Diese umfasst einen Stiel und daran einer Hülse 2 mit an deren Vorderseite einem Stiel 4, der um einen Winkel von ca. 110° zur Achse der Hülse nach hinten umgebogen ist und woran das als Hacke wirkende Arbeitsinstrument aus Stahlblech angeschraubt ist. Dieses Stahlblech ist kännelartig geformt und läuft am unteren Ende in einen zugespitzten Bogen aus. Längs einer Mitte ist eine Verstärkungsrippe 6 ausgeformt, die ein Loch 8 sowie weiter unten einen Schlitz 7 aufweist. Das erlaubt das unverrückbare, satte Aufsetzen eines Pflugaufsatzes 9, der von vorne aufgesetzt und mit der Hacke verschraubt wird. Der Pflugaufsatz 9 besteht aus einem einzigen Stück Blech, mit einer Pflugspitze 9a, einem Formbrett 9b und einer Landseite 9", wobei das Formbrett 9a nach aussen gebogen ist, um den Boden in der üblichen Weise zu wenden, während die untere, waagrechte Kante der Landseite bei 9a nach innen gerollt ist und so eine rohrförmige Aussenseite formt, um diese Seite zu verstärken und mit dieser rohrförmigen Aussenseite über den Boden zu fahren. Das dient zur Unterstützung für die Führung oder Lenkung der Pflugbewegungen. Anstelle eines solchen Pflugaufsatzes 9 kann ein pfeilförmiger Pflug mit beidseits gleichen nach aussen abstehenden Flügeln aufgeschraubt werden, wobei diese Flügel dann über ihre Länge satt auf dem Boden aufliegen und womit sodann der Boden gekehrt werden kann. Je nachdem, ob dieses Werkzeug als Hacke, als Pflug oder als Kehrmittel eingesetzt werden soll, müssen die entsprechenden Werkzeuge auf die Hacke gesondert montiert werden. FR 748 755 zeigt einen Kultivator in Form eines Mehrscharenpfluges, der von Hand durch das Erdreich gezogen wird. Die Pflugschar ist die Schneide eines Pfluges. Als Schar wird unpräzise auch der Pflugkörper in seiner Gesamtheit bezeichnet. Man spricht von *mehrscharigen* Pflügen, meint aber eigentlich Pflüge mit mehreren Körpern. Das schwierige Problem bei diesen Handpflügen oder Kultivatoren besteht darin, sie so einzustellen, dass sie die ganze Zeit über die gleiche Eindringtiefe in den Boden beibehalten, was in der Praxis schwer zu erreichen ist. Die Eindringtiefe in den Boden hängt von der Form und der Anordnung der Schare oder der Scharen ab. Die Lösung nach dieser FR 748 755 besteht darin, dass der Kultivator so konstruiert ist, dass er mehrere Scharen aufweist, z. B. drei Scharen, von denen eine zwischen den beiden anderen liegt und nach vorne versetzt angeordnet iste und so eine vordere Schare bildet, und beiden dann hinteren Scharen seitlich zu dieser vorderen versetzt angeordnet sind. Die Scharen sind je in einem Stück mit den Halterungen 2 geschmiedet oder mit diesen verschweisst. In der dargestellten Ausführungsform treffen sich die Halterungen 2 der Scharen an einem Punkt 3, an dem auch die Hülse 4, die den Hals des Instruments aufnimmt, angebracht ist. Die Pflugscharen, die mit ihren Halterungen 2 in einem Stück geschmiedet oder aus Stahlblech zugeschnitten sind, werden leicht zu einem Fischgrätenmuster gebogen. Der vordere Teil 5 bildet einen spitzen Winkel von etwa 40° bis 60°, an den sich ein gezahnter Teil 6 anschliesst, dessen Aussenkanten parallel zueinander verlaufen. An ihrem hinteren Ende haben die Pflugscharen eine schwalbenschwanzförmige Form. Wenn dieser Kultivator durch den Boden gezogen wird, bleibt er in der gleichen Arbeitsebene, ohne dass es dazu einer besonderen Führung oder eines besonderen Drucks bedarf. Jede der Scharen ist in ihrer Mittelebene leicht gebogen und ihre Halterungen sind von unten stufenweise mit ihnen verbunden, wobei sich der Verbindungspunkt etwa im Schwerpunkt der Schare befindet. Aufgrund der Form und Anordnung der Bestandteile wird eine gleichbleibende Eindringtiefe erzielt, wobei diese Wirkung hauptsächlich durch die Schwalbenschwanzform der Scharen erzielt wird. Die Scharträger sind sonst in ihren gebogenen Teilen nach vorne zu einer scharfen Kante zugespitzt. US2016/0157408 zeigt ein Handwerkzeug zum gleichzeitigen Erstellen von parallelen Furchen in einem Humusbeet. Wie man in Figur 1 sieht sind mehrere pfeilförmige Pflüge 22 sind nebeneinander auf einem Querprofil 18 angeordnet und dieses Querprofil kann von einem rechtwinklig daran abstehenden Zugstab 12 mit an seinem oberen Ende quer dazu verlaufenden Bügel als Handgriff 10 durch das Erdreich gezogen werden. Auf dem Querprofil 18 stehen Bolzen 28 nach oben ab, auf die Gewichtsscheiben 40 aufgesteckt werden können, wie man das in Figur 1 sieht, um die hier vier pfeilförmigen Pflüge 22 in das Erdreich hineinzudrücken. Das Werkzeug ist einzig als Mehrscharenpflug einsetzbar.

Diese Erfindung hat angesichts dieser obigen Lösungen zur Aufgabe, ein Universal-Gartenwerkzeug zu schaffen, welches mehrere herkömmliche ersetzen kann und erst noch sehr effizient in seiner Anwendung ist. Es soll, anders als die in den erwähnten Dokumenten gezeigten Werkzeuge, ohne Veränderungen am Gartenwerkzeug vornehmen zu müssen, sowohl erstens als Hacke, zweitens als Schaber zum Ziehen und Stossen sowie drittens als Pflug eingesetzt werden können, und beim Einsatz als Pflug Furchen schaffen.

Diese Aufgabe wird gelöst von einem Gartenwerkzeug nach dem Oberbegriff des Patentanspruchs 1 mit seinen kennzeichnenden Merkmalen.

Dieses Gartenwerkzeug und sein Einsatz wird anhand der Figuren beschrieben und erklärt.

Es zeigt:
- Figur 1:: Das Gartenwerkzeug in einer Seitenansicht;
- Figur 1:: Das Gartenwerkzeug in einer Seitenansicht;
- Figur 2:: Das Gartenwerkzeug in vergrösserter Darstellung des vorderen Werkzeugteils aus Stahl;
- Figur 3:: Das Gartenwerkzeug in vergrösserter Darstellung des vorderen Werkzeugteils aus Stahl mit gegenüber Figur 2 dem Stiel um ca. 180° gedrehter Lage;
- Figur 4:: Das Gartenwerkzeug von schräg vorn und oben gesehen;
- Figur 5:: Ein Gartenwerkzeug am vorderen Ende des Stils, mit pflugartig gekrümmten Flügeln zum Wenden von Humus, von seitlich und schräg oben gesehen;
- Figur 6:: Das Gartenwerkzeug nach Figur 6 von vorne und oben gesehen;
- Figur 7:: Das Gartenwerkzeug im Einsatz zum Zerkleinern von Humusklumpen und zum Verteilen und Glattstreichen einer Humusschicht;
- Figur 8:: Das Gartenwerkzeug im Einsatz als Schaber;
- Figur 9:: Das Gartenwerkzeug im Einsatz als Pflug zum Erstellen einer Furche zum späteren Setzen von Setzlingen oder Zwiebeln, oder zum Einsähen;
- Figur 10:: Das Gartenwerkzeug von oben gesehen und seine Krümmung nach aussen im oberen Bereich;
- Figur 11:: Das Gartenwerkzeug von der Seite her gesehen seine Krümmung nach aussen im oberen Bereich;
- Figur 12:: Das Gartenwerkzeug in Einsatzlage zum Pflügen;
- Figur 13:: Ein Gartenwerkzeug mit einer Klinge am unteren Rand angeschraubt;
- Figur 14:: Das Gartenwerkzeug nach Figur 13 mit der Klinge am unteren Rand angeschraubt, und daneben die Klinge liegend und gesondert dargestellt.

Zunächst zeigt die Figur 1 das Gartenwerkzeug in einer Seitenansicht. Es besteht aus einem Holz-Stiel 1 von ca. 1100 mm Länge und am vorderen Bereich einem Werkzeug aus Stahlblech, vorzugswiese aus einem rostfeien Chromstahlblech gefertigt. Am vorderen Endbereich ist der Stiel 1 von einer Manschette 7 aus Stahl umfasst. Diese Manschette 7 ist etwa 100 mm lang und umfasst den Stiel 1 aus Holz, der ca. 35 mm dick ist. Am Stiel 1 ist ein Rundstab 3 angeschweisst, der vom vorderen Ende der Manschette 7 aus ein stückweit ihr entlang geführt ist und dann um ca. 80° ± 5° nach abgebogen ist und sich dann also in einem solchen Winkel von der Manschette 7 und dem Stiel 1 nach unten und hinten erstreckt. Um diesen weg vom Stiel sich erstreckenden Rundstab 6 ist eine Stahlblech 4, das um 90° abgekantet ist, mit der Innenseite seiner Kante 10 am Rundstab 3 anliegend mit demselben verschweisst. Das Stahlblech 4 bildet auf jeder Seite seiner Abkantung einen Flügel. Hier sieht man nur den Flügel 5, der dem Betrachter zugewandt ist, der aber nicht in der Zeichnungsblattebene verläuft, sondern vom Rundstab 3 aus nach oben aus der Blattebene aufsteigt.

Die Figur 2 zeigt das Gartenwerkzeug in vergrösserter Darstellung des vorderen Werkzeugteils aus Stahl. Deutlich erkennbar ist hier die Manschette 7 am vorderen Ende des Stiels 1 und der daran angeschweisste Rundstahl 3, der vom vorderen Ende der Manschette 7 aus nach hinten geführt ist und nach der halben Länge der Manschette 7 rechtwinklig nach aussen gekrümmt ist. Er verläuft innerhalb des aufgeschweissten Stahlblechs 4 weiter bis nahe zu dessen unterem, äusseren Ende hin. Auch hier sieht man nur den Flügel 5, der dem Betrachter zugewandt ist, und der schiefwinklig zum Stiel 1 verläuft, sodass die beiden Flügel einen Pfeil bildet, der vom vorderen Ende des Stiels 1 gegen das hintere Ende des Stiels 1 gerichtet ist.

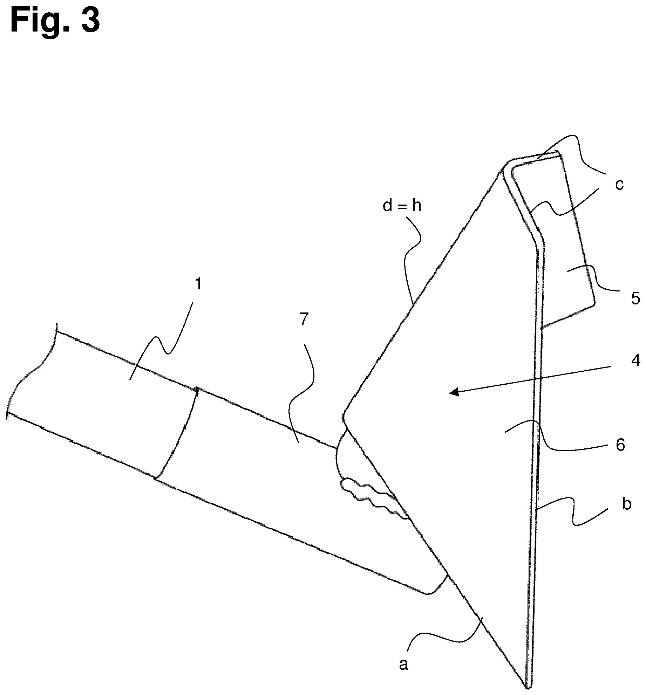

In Figur 3 sieht man dieses Gartenwerkzeug in vergrösserter Darstellung des vorderen Werkzeugteils aus Stahlblech mit gegenüber Figur 2 dem Stiel 1 um ca. 180° um seine Längsachse gedrehter Lage. Jetzt ist auch der zweite Flügel 6 erkennbar, der mit dem Flügel 5 einen rechten Winkel einschliesst. Die beiden Flügel des Stahlblechs können je eine rechtswinkliges Dreieck bilden, oder auch eines, dessen unteren Spitze gebrochen ist, sodass ein Trapez gebildet ist, wie hier gezeigt. Das hier dem Betrachter zugewandte untere Ende des Stahlblechs 4 weist dann ein stumpfes Ende auf, läuft also nicht in eine Spitze aus. Die beiden Flügel 5, 6 bilden dann je die Form eines Trapezes, wobei dieses jeweils eine untere, grosse Grundlinie a aufweist, dann eine Höhe h, welche die eine Seite d des Trapezes bildet, und oben eine kleine Grundlinie c. Die andere Seite b des Trapezes bildet einen äusseren Rand, der schiefwinklig zu den Grundlinien a und c des Trapezes verläuft und eine Kante bildet, mit welcher gehakt werden kann, etwa um Humusklumpen zu zerkleinern, die aber auch als Schabkante dient, um ein Humusbeet zu ebenen oder eine Fläche von Humus und Steinen zu säubern.

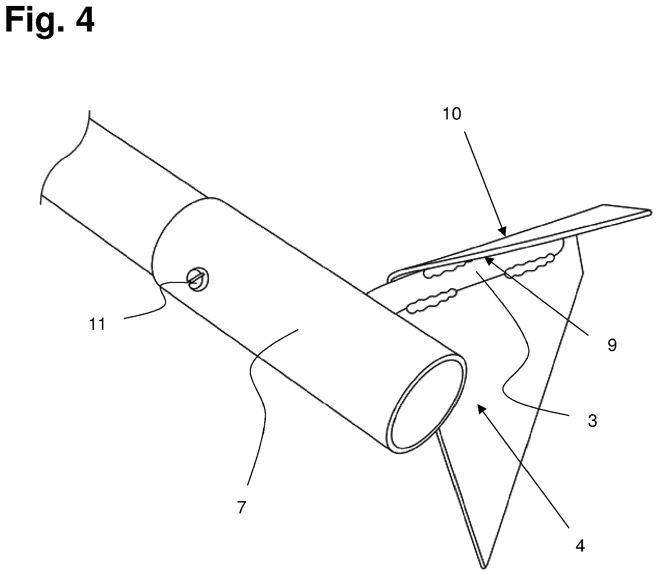

Die Figur 4 zeigt das Gartenwerkzeug von schräg vorn und oben gesehen. Die Manschette 7 ist eine Rohrabschnitt, der vom vorderen Ende des Stiels 1 aus über denselben gestülpt ist und mit einer radialen Schraube 11 am Stiel 1 gesichert ist. Jenseits der Schraube 11 ragt der Rundstab 3 von der Manschette 7 rechtwinklig ab und wie man hier erkennt, ist das um einen rechten Winkel abgekantete Stahlblech 4 mit der Innenseite 9 seines Winkels 10 an diesen Rundstab 3 angelegt und mit ihm verschweisst.

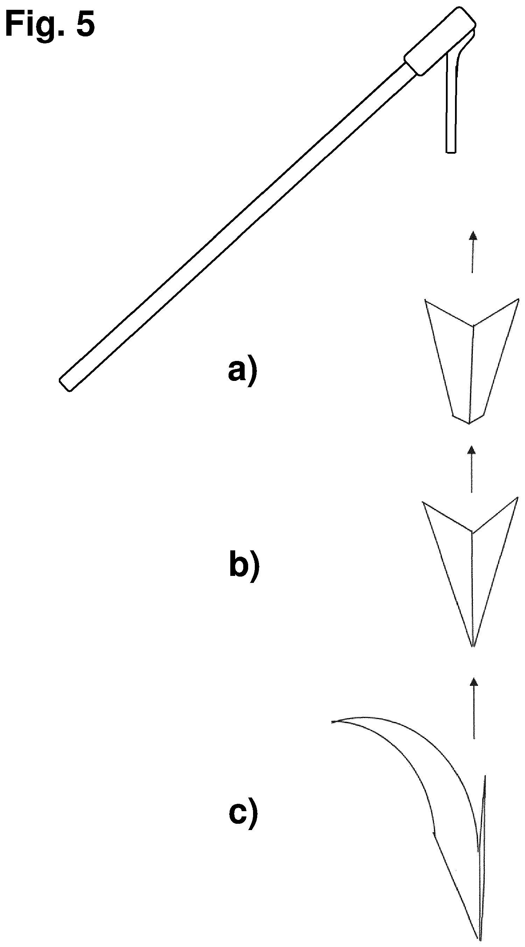

Die Figur 5 a) bis c) zeigt ein Gartenwerkzeug mit seinem Stiel und drei unterschiedlichen Varianten für den Pflug, der an diesen Stiel angedockt werden kann. Die oberste Variante a) des Pfluges bildet zwei trapezförmige Flügel, die längs ihrer Trapezhöhe eine gemeinsame Kante bilden und im rechten Winkel zueinander stehen, nach unten schmaler werden und unten in ein stumpfes Ende auslaufen, das heisst mit einer Seite eines Trapezes enden. Der Pflug ist in dieser Weise aus einem einstückigen Chromstahlblech geformt. Diese Variante ist hervorragend geeignet, um eine 10 cm bis 20 cm tiefe Furche zu erstellen, die unten einen bandförmigen ebenen Streifen als Boden bildet. Eine solche Furche eignet sich hervorragend zum Eintrag einer Schicht Dünger auf diesem ebenen streifenförmigen Boden der Furche, und auf diese Düngerschicht werden hernach die Samen der zu ziehenden Feldfrüchte oder des Gemüses ausgestreut. Sie liegen dann auf etwa halber Höhe der erstellten Furche. Am Schluss wird mit dem gleichen Gartenwerkzeug, unter Einsatz einer Längsseite des Pfluges das beidseitige Erdreich in die Furche zurückgezogen oder geschoben und die Furche wird oben ausplaniert.

Die nicht beanspruchte Variante b) darunter in Figur 5 zeigt einen Pflug, der zwei dreieckige Flügel bildet die hier je ein rechtwinkliges Dreieck formen. Diese beiden Dreiecke sind längs der längeren Kathete miteinander einstückig verbunden, sodass also der Pflug aus einem einstückigen Chromstahl-Blech geformt ist. Diese Pflug läuft entsprechend unten ein eine Spitze aus. Er eignet sich hervorragend, um die oberste Humusschicht zum Beispiel eines Gartenbeets zu lockern und auch um Gras und Wurzeln zu entfernen. Er ist ein ideales Werkzeug zum Hacken zwischen Reihen von Karotten, Zwiebeln, Radieschen usw. Es geht damit viel schneller als mit einer Gartenhacke oder mittels eines Spatens zum Umstechen des Bodens. Genauso leicht lässt sich eine nach unten in eine Spitze auslaufende Furche erstellen. Eine solche Furche eignet sich besonders zum Anpflanzen etwa von Kartoffeln, Mais, Kohl und Wirz.

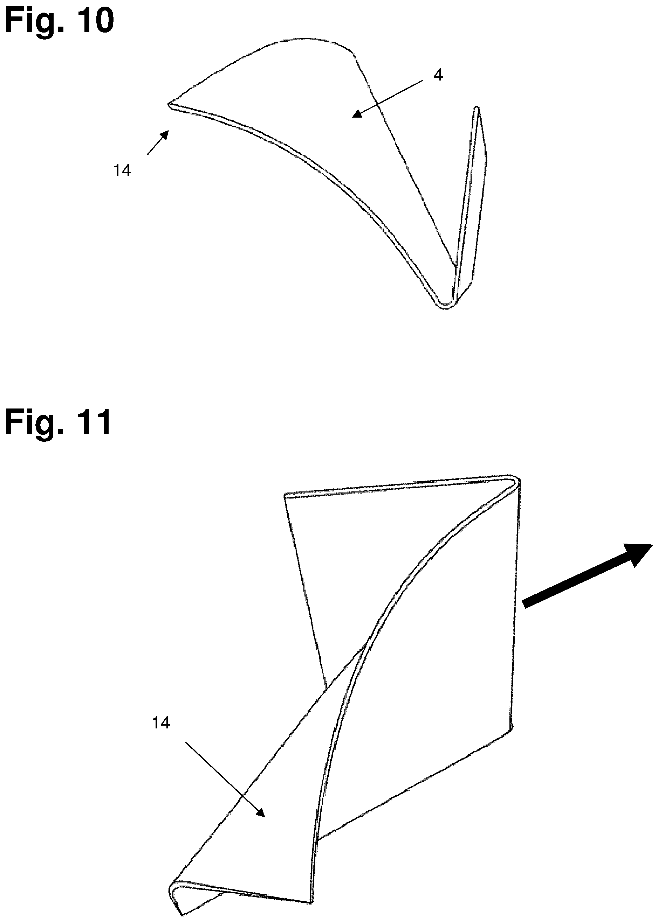

Die nicht beanspruchte Variante c) entspricht jener in Figur 10 bis 12 gezeigten Ausführung. Hier ist ein Flügel des Pfluges fast in Zugrichtung des Pfluges ausgerichtet und der andere steht in grösserem Winkel von der Zugrichtung ab und ist auf seine oberen Seite gegen hinten nach aussen gekrümmt. Es handelt sich um ein sehr vielseitiges Werkzeug. Es kann zum Hacken, zum Pflügen, zum Glattstreichen des Humus von Beeten, zum Wegschaben von Erdreich und Steinen auf einer harten Oberfläche von etwa auf Holzbalken oder Steinplatten eingesetzt werden. Mit diesem Pflug kann äusserst rasch und bequem eine Furche erstellt werden, um hernach Zwiebeln darin zu setzen oder Samen einzustreuen. Man zieht den Pflug einfach durch das Erdreich und in einem Zug ist die Furche erstellt. Nach dem Setzen der Zwiebeln oder dem Einstreuen von Samen kann die Furche mit einem der Flügel des Pfluges zugeschüttet und glattgestrichen werden. Es kann auch eine Furche ganz nahe längs eines Beetrandes erstellt werden, wenn das Beet wie oft mit einem liegenden Holzbalken begrenzt ist. In diesem Fall zieht dann den Flügel des Pfluges, der annähernd in Zugrichtung zeigt, längs des Holzbalkens, der dafür als Führung dient. Es entsteht eine Furche ganz nah und längs des Holzbalkens. Die Krümmung des anderen Pflugflügels wird die vom Pflug verdrängte Erde beim Vorwärtsbewegen des Pfluges gewendet, was das Erdreich lockert und Luft-Eintrag in den Humus unterstützt.

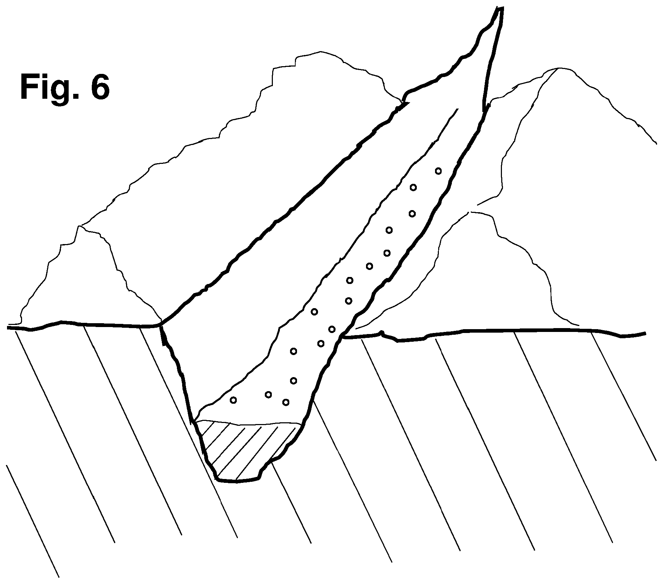

Die Figur 6 zeigt eine mit dem Pflug nach Figur 5a) erstellte Furche mit ebenem streifenförmigen Boden. Das umgepflügte Erdreich liegt links und rechts der Furche. Die leere Furche wurde hier bis etwa zu einem Dritter ihrer Höhe mit einem Düngermaterial gefüllt. Hernach wurden Samenkörper auf diese Düngerbasis gestreut und am Schluss wird mit dem Gartenwerkzeug, das heisst mit einem Flügel des Pfluges, das Erdreich links und rechts der Furche in dieselbe hineingezogen und die Furche wird planiert.

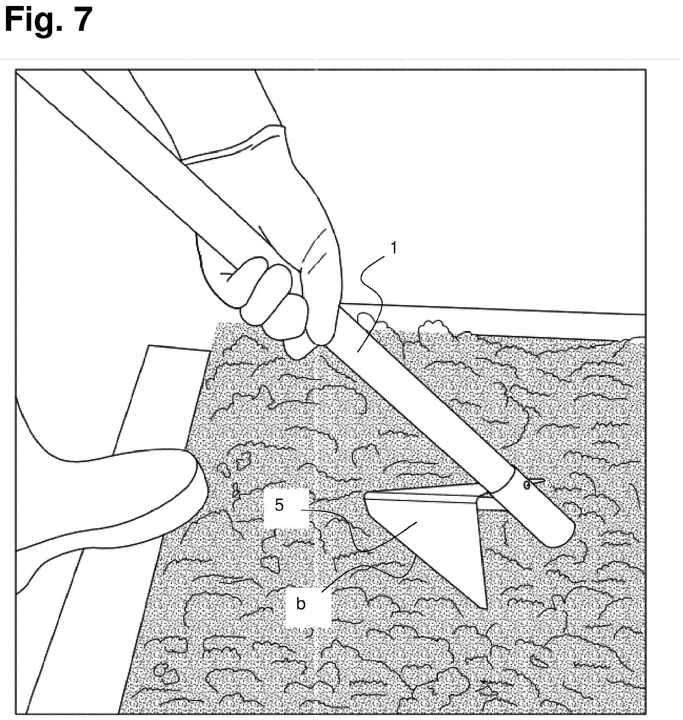

In Figur 7 ist das Gartenwerkzeug im Einsatz zum Verkleinern von Humusklumpen und zum Ebnen bzw. Glattstreichen des Humusbeetes gezeigt. Man hält den Stiel 1 in einer solchen Drehlage, dass die Kante b am Werkzeug nach unten gerichtet ist, und kann dann diese Kante b zum Hacken einsetzen, oder zum Entlangstreichen längs der Beet-Oberfläche, um das Humusbeet zu ebnen und zu glätten. Der Flügel 5 bzw. seine Fläche kann als Pflug oder Schaber verwenden werden.

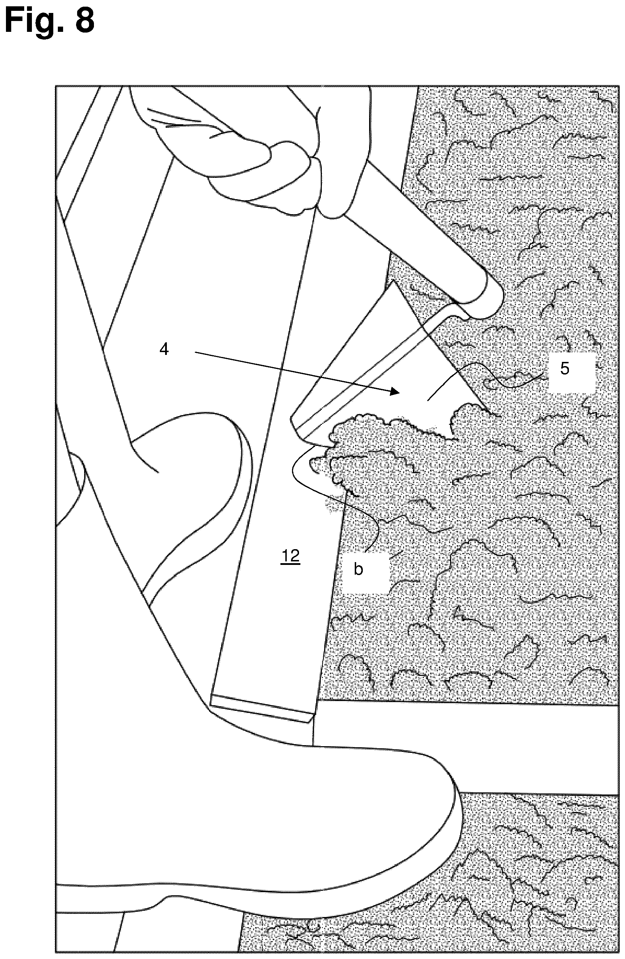

Die Figur 8 zeigt das Gartenwerkzeug im Einsatz als Schaber. Es wird im gezeigten Beispiel mit der Kante b auf einem Holzbalken 12, der hier als Begrenzung es Pflanzbeetes dient, demselben entlanggefahren, und der Flügel 5 wirkt dabei als Pflug oder Schaber und so gelingt es sehr leicht, allen Humus und allfällige Steine vom Balken 12 weg zu befördern und wegzustreichen.

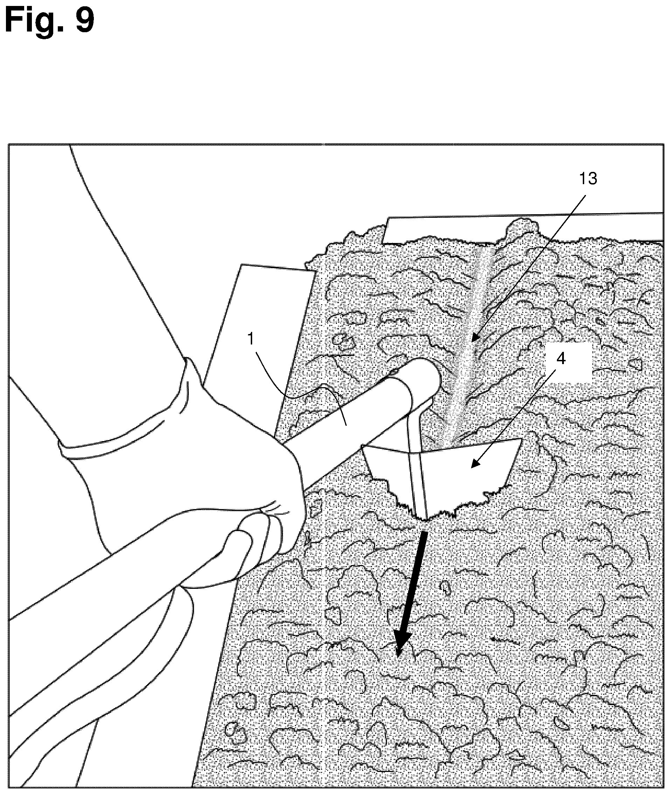

Die Figur 9 zeigt einen besonders effizienten Einsatz dieses Gartenwerkzeug, nämlich als Pflug zum Erstellen einer Furche in einem Pflanzbeet, zum späteren Setzen von Setzlingen oder Zwiebeln, oder zum Einsähen. Hierfür wird das Gartenwerkzeug am Stiel 1 gezogen und mit dem Stahlwerkzeug am vorderen Ende in den Humus eingesteckt und hernach durch den Humus gezogen. Das Stahlwerkzeug wirkt hier als Pflug und verdrängt den Humus beidseits, sodass eine V-förmige Furche 13 entsteht, in die dann Setzlinge eingesetzt werden können oder auch Zwiebeln für allerlei Pflanzen gesetzt werden können. Am Schluss kann die Furche wieder mit demselben Werkzeug zugeschüttet werden, indem an sie als Schaber verwendet wird, wie in Figur 7 gezeigt.

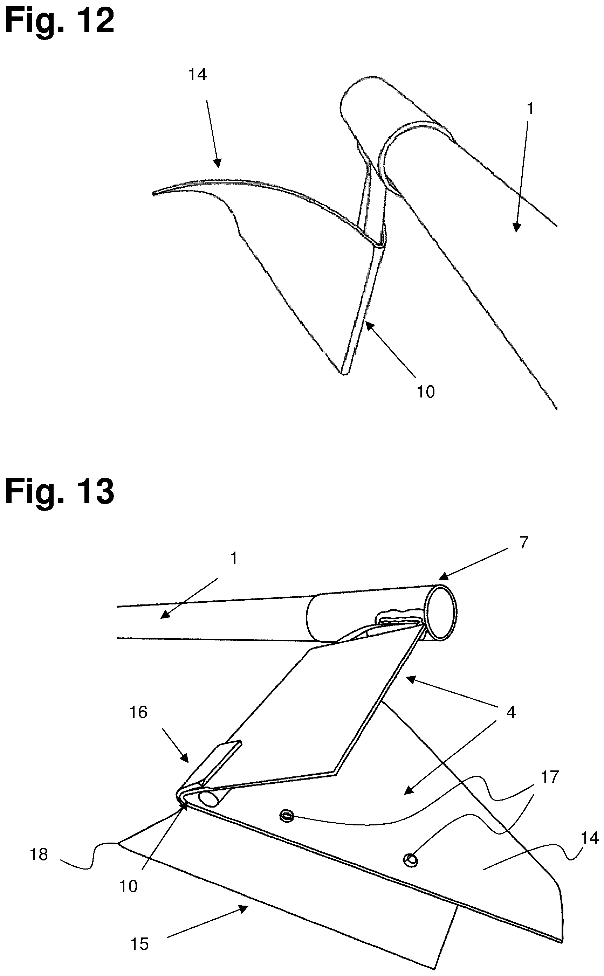

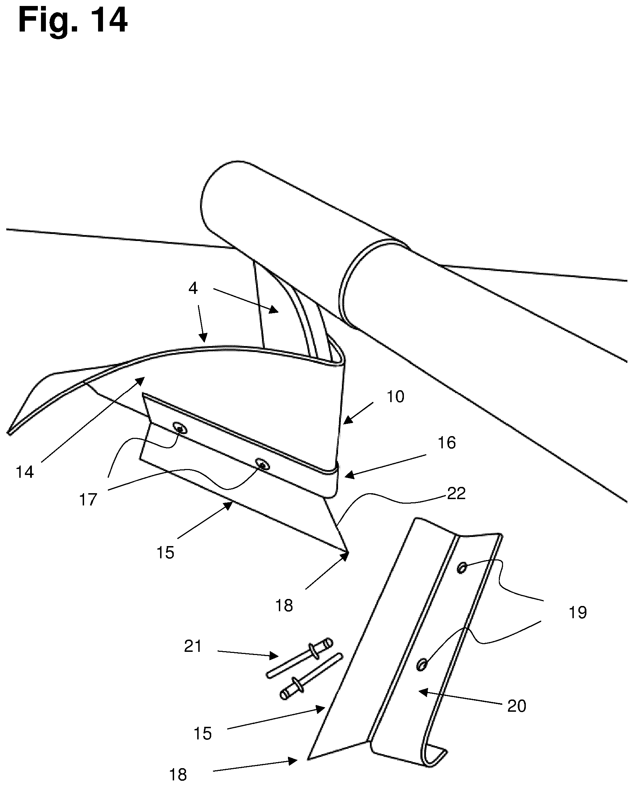

Die Figur 10 zeigt das Gartenwerkzeug von oben gesehen mit einer besonderen Krümmung seines einen Flügels 14 des Stahlblechs 4, indem dessen obere äussere Ecke nach aussen gekrümmt ist, um beim Pflügen das Erdreich zur Seite zu schieben und gleichzeitig zu wenden. Der gegenüberliegende Flügel des Stahlblechs hingegen ist eben ausgeführt, ohne Krümmung, und kürzer. Die Figur 11 zeigt das so geformte Stahlblech mit auf einer Seite einem gekrümmten Flügel 14 in Einsatzlage zum Pflügen, wenn es in Richtung des eingezeichneten Pfeils durch das Erdreich gezogen wird. Die hintere obere Ecke des Flügels 14 ist nach aussen gekrümmt, sodass das zur Seite gepflügte Erdreich gewendet wird. In Figur 12 ist das Gartenwerkzeug mit so einem einseitig gekrümmten Flügel 14 des Stahlblechs 4 in Einsatzlage gezeigt, mit dem zugehörigen Stiel 1. Es dient dazu, eine schmale Furche zu ziehen, weswegen nur einer der beiden Flügel an seiner oberen hinteren Ecke nach aussen gekrümmt ist. In Figur 13 erkennt man, dass der ebene Flügel in einem flacheren Winkel zum Stiel verläuft als jener mit der nach aussen gekrümmten Ecke. Damit dieses Stahlblech als Pflug wirkend im Erdreich geführt ist, dient hier eine angeschraubte Klinge 15, die im vorderen Bereich mit einer Krümmung 16 um den vorderen Winkel 10 des Stahlblechs geführt ist. Die Klinge 15 ist hier mittels zweiter Schrauben 17 mit dem Stahlflügel mit Krümmung verschraubt. Die Figur 14 zeigt diesen so gebildeten Pflug in Einsatzlage dargestellt. Die Klinge 15 greift wie eine Messer tief ins Erdreich ein und wird durch das Erdreich gezogen und stabilisiert damit den ganzen so gebildeten Pflug. Sie läuft vorne in eine Spitze 18 aus und ist mir ihrer vorderen Krümmung um den vorderen Winkel 10 der beiden Flügel des Stahlblechs 4 geführt. Beim Pflügen wird somit der so gebildete Pflug mit der Klinge 15 durch das Erdreich gezogen, welche den Pflug führt und stabilisiert, sodass eine schmale Furche gebildet wird, die durch die Krümmung des einen Flügels zur Seite ausgeworfen wird.

In Figur 14 ist die hier vor dem Pflug am Boden liegende Klinge 15 mit ihrer scharfen Vorderkante 22 gesondert dargestellt. Sie läuft von einem Klingenträger 20 aus durch eine Erweiterung nach unten und bildet eine Klinge, ähnlich einer Messerklinge. Der Klingenträger 20 weist Löcher 19 zum Befestigen im unteren Randbereich des zu bestückenden Flügels des Pfluges auf, und die Schrauben sind neben der Klinge 15 dargestellt. Anstelle mit einer Verschraubung kann dieser Klingenträger auch mittels Bobnieten 21 bzw. Blindnieten mit dem Stahlblech verbunden sein.

### Ziffernverzeichnis

- 1: Stiel
- 2: Vorderer Ende des Stiels
- 3: Rundstab an der Manschette
- 4: Um 90° abgekantetes Stahlblech
- 5: Erster Flügel des Stahlblechs
- 6: Zweiter Flügel des Stahlblechs
- 7: Manschette am vorderen Ende des Stiels
- 8: Endbereich des Stiels
- 9: Innenseite des abgekanteten Winkels am Stahlblech 4
- 10: Winkel des Stahlblechs
- 11: Schraube zum Sichern der Manschette auf dem Stiel 1
- 12: Holzbalken zur Begrenzung des Pflanzbeetes
- 13: Furche im Pflanzbeet
- 14: Obere äussere Ecke des Stahlblechs
- 15: Klinge
- 16: Krümmung im vorderen Bereich der Klinge
- 17: Schrauben zur Befestigung der Klinge am Stahlblech 4
- 18: Vordere Spitze der Klinge 15
- 19: Löcher am Klingenträger
- 20: Klingenträger
- 21: Bobnieten
- 22: Vordere Kante der Klinge 15

## Patentansprüche

1. Gartenwerkzeug mit einem Stiel (1), an dessen vorderem Ende (2) eine Manschette (7) den Endbereich (8) des Stiels (1) umfasst und daran ein Rundstahl (3) in einem Winkel von 80° ± 5° nach aussen und hinten gebogen vom Stiel (1) absteht, und um diesen abstehenden Rundstahl (3) ein um einen Winkel von 20° bis 90° abgekantetes Stahlblech (4) mit seiner Innenseite (9) des Winkels (10) anliegt und an ihm angeschweisst ist, sodass das Stahlblech (4) zwei Flügel (5, 6) bildet, die je ein Trapez bilden, wobei eine Seite vom äusseren Ende des Rundstahls (3) aus schiefwinklig zum Rundstahl (3) nach oben verläuft,
***dadurch gekennzeichnet, dass*** die Seite des Trapezes, die sich längs des Rundstabes (3) erstreckt, seine Höhe h und Seite d bildet, und der Rand, der sich zunächst dem Stiel (1) befindet, die längere Grundseite a des Trapezes bildet, und die gegenüber liegende Seite die kürzere Seite c des Trapezes bildet, während die Seite gegenüber der Höhe h bzw. Seite d die längste Seite b Trapezes bilden, und wobei die längere Grundseite a kürzer als die Höhe h des Trapezes ist und die kürzere Grundseite c höchstens 25% der längeren Grundseite a misst.

2. Gartenwerkzeug nach Anspruch 1, **dadurch gekennzeichnet, dass** alle Stahlteile aus rostfreiem Chromstahl ausgeführt sind und die Manschette 100 mm lang ist und einen Innendurchmesser von 30 mm aufweist, der Rundstahl (3) 10 mm stark ist und 150 mm von der Manschette wegragt, und das abgekantete Stahlblech (4) 2 mm stark ist.

3. Gartenwerkzeug nach einem der vorangehenden Ansprüche, **dadurch gekennzeichnet, dass** die Ränder der beiden Flügel, die je ein Trapez bilden, folgende Masse aufweisen:
| | |
|---|---|
| Die längere Grundseite a des Trapezes: | 100 mm |
| Die kürzere Seite c des Trapezes: | 18 mm |
| Die Höhe h des Trapezes: | 135 mm |
| Die der Höhe gegenüberliegende Seite b des Trapezes: | 160 mm |

4. Gartenwerkzeug nach einem der vorangehenden Ansprüche, **dadurch gekennzeichnet, dass** der Stiel 30 mm stark ist und 1100 mm lang.

5. Gartenwerkzeug nach einem der vorangehenden Ansprüche, **dadurch gekennzeichnet, dass** der Rundstahl (3), wo er der Manschette (7) entlang geführt ist, mit der Manschette (7) verschweisst ist, und das Stahlblech (4) mit der Innenseite seines Winkels zwischen seinen beiden Flügeln (5, 6) auf der ganzen Länge mit dem Rundstahl (3) verschweisst ist.

6. Gartenwerkzeug nach einem der vorangehenden Ansprüche, **dadurch gekennzeichnet, dass** mindestens ein Flügel (5, 6) nach Art eines Pfluges gekrümmt ausgeführt sind, sodass beim Ziehen der Flügel durch eine Humusschicht dieselbe gewendet wird.

## Claims

1. Garden tool with a handle (1), at the front end (2) of which a sleeve (7) surrounds the end area (8) of the handle (1) and from which a round steel bar (3) protrudes at an angle of 80° ± 5° outwards and backwards from the handle (1), and around this protruding round steel bar (3) is bent at an angle of 20° to 90° and is welded to it with its inner side (9) of the angle (10) resting against it, so that the steel sheet (4) forms two wings (5, 6), each of which forms a trapezoid, with one side extending upwards from the outer end of the round steel bar (3) at an oblique angle to the round steel bar (3), ***characterised in that*** the side of the trapezoid extending along the round bar (3) forms its height h and side d, and the edge closest to the stem (1) forms the longer base a of the trapezoid, and the opposite side forms the shorter side c of the trapezoid, while the side opposite the height h or side d form the longest side b of the trapezoid, and wherein the longer base a is shorter than the height h of the trapezoid and the shorter base c measures at most 25% of the longer base a.

2. Garden tool according to claim 1, ***characterised in that*** all steel parts are made of stainless chrome steel and the sleeve is 100 mm long and has an inner diameter of 30 mm, the round steel (3) is 10 mm thick and protrudes 150 mm from the sleeve, and the folded steel sheet (4) is 2 mm thick.

3. Garden tool according to one of the preceding claims, ***characterised in that*** the edges of the two wings, each of which forms a trapezoid, have the following dimensions:
• The longer base a of the trapezoid: 100 mm
• The shorter side c of the trapezoid: 18 mm
• The height h of the trapezoid: 135 mm
• The side b of the trapezoid opposite the height: 160 mm

4. Garden tool according to one of the preceding claims, ***characterised in that*** the handle is 30 mm thick and 1100 mm long.

5. Garden tool according to one of the preceding claims, ***characterised in that*** the round steel (3), is welded to the sleeve (7) where it runs along the sleeve (7), and the steel plate (4) is welded to the round steel (3) along its entire length with the inside of its angle between its two wings (5, 6).

6. Garden tool according to one of the preceding claims, ***characterised in that*** at least one wing (5, 6) is curved in the manner of a plough, so that when the wings are pulled through a layer of humus, the latter is turned over.

## Revendications

1. Outil de jardin comportant un manche (1), à l'extrémité avant (2) duquel une manchette (7) entoure la partie terminale (8) du manche (1), et auquel est fixé une tige ronde (3) qui s'étend vers l'extérieur et vers l'arrière à un angle de 80° ± 5° par rapport au manche (1), autour de cette tige ronde (3) faisant saillie est disposée une tôle d'acier pliée (4) selon un angle compris entre 20° et 90°, dont la face intérieure (9) de l'angle (10) est appliquée contre ladite tige ronde (3) et y est soudée, de sorte que la tôle d'acier (4) forme deux ailes (5, 6), chacune ayant la forme d'un trapèze, dont un côté, partant de l'extrémité extérieure de la tige ronde (3), s'étend obliquement vers le haut par rapport à celle-ci, ***caractérisé en ce que*** le côté du trapèze s'étendant le long de la tige ronde (3) forme sa hauteur *h* et son côté *d*, et que le bord situé le plus près du manche (1) constitue la grande base *a* du trapèze, le côté opposé formant la petite base *c* du trapèze, tandis que le côté opposé à la hauteur *h* ou au côté *d* forme le côté le plus long *b* du trapèze, la grande base a étant plus courte que la hauteur *h* du trapèze, et la petite base c représentant au maximum 25 % de la grande base *a.*

2. Outil de jardin selon la revendication 1, ***caractérisé en ce que*** toutes les pièces en acier sont réalisées en acier inoxydable au chrome, la manchette ayant une longueur de 100 mm et un diamètre intérieur de 30 mm, la tige ronde (3) ayant un diamètre de 10 mm et dépassant de la manchette sur une longueur de 150 mm, et la tôle d'acier pliée (4) ayant une épaisseur de 2 mm.

3. Outil de jardin selon l'une quelconque des revendications précédentes, ***caractérisé en ce que*** les bords des deux ailes, chacune formant un trapèze, présentent les dimensions suivantes:
• Grande base *a* du trapèze : 100 mm
• Petite base *c* du trapèze : 18 mm
• Hauteur *h* du trapèze : 135 mm
• Côté opposé à la hauteur *b* du trapèze : 160 mm

4. Outil de jardin selon l'une quelconque des revendications précédentes, ***caractérisé en ce que*** le manche a un diamètre de 30 mm et une longueur de 1100 mm.

5. Outil de jardin selon l'une quelconque des revendications précédentes, ***caractérisé en ce que*** la tige ronde (3), là où elle longe la manchette (7), est soudée à celle-ci, et que la tôle d'acier (4), par la face intérieure de son angle entre les deux ailes (5, 6), est soudée sur toute sa longueur à la tige ronde (3).

6. Outil de jardin selon l'une quelconque des revendications précédentes, **caractérisé en ce qu'**au moins une des ailes (5, 6) est réalisée courbée à la manière d'une charrue, de sorte qu'en tirant l'aile à travers une couche d'humus, celle-ci est retournée.
